# EUROPEAN PATENT APPLICATION

(11) **EP 1 618 950 A1**
(43) Date of publication of application: **25.01.2006**
(21) Application number: 05013476.6
(22) Date of filing: 22.06.2005
(51) Int. Cl.: B01J 20/32

(54) **Monolithic composition and method**

(30) Priority: 23.07.2004 US 898738
(71) Applicant: Agilent Technologies, Inc., Palo Alto, CA 94306 (US)
(72) Inventor: Pearson, Laurence T., Wilmington DE 19810 (US)
(74) Representative: Schoppe, Fritz

(57) **Abstract**

An inorganic monolithic material that includes macropores having an inner surface and nanoparticles attached to the inner surface of the material. The macropores and the nanoparticles can be optionally attached to molecular moieties that impart a specific functionality to the material. The material has particular applications to separations and chromatography.

## Description

### FIELD OF THE INVENTION

The invention relates to compositions for use as stationary phases in chromatography. More specifically the invention relates to inorganic materials for application to chromatography. The invention has potential application to thin-layer chromatography, blood separation, moisture-absorbing porous materials, porous materials for adsorbing low-molecular materials for deodorization, or porous materials for enzyme carriers.

### BACKGROUND OF THE INVENTION

Porous materials are useful for use in a variety of applications. For instance, porous materials may be used for producing columns for chromatography, porous filters for blood separations, porous catalysts, or enzyme supports. These materials have an advantage over other materials in that they can be used unmodified or in modified form. For instance, porous materials can be modified by attaching or coating with moieties that yield useful surface properties. In addition, porous materials can also be prepared by binding enzymes, or catalytic metal elements to their surfaces.

Monolithic materials are a particular type of porous material. These materials comprise a single continuous structure with pores that result in a continuous fluid path through the structure. In chromatography applications, monolithic materials can be used to lower the complexity of the manufacturing steps. These materials also provide an advantage in that they are capable of being easily adapted or modified. These materials, however, suffer from the limitation that they often comprise a particular pore size or structure that is fixed or defined.

Since these materials provide a number of important chemical properties, efforts have been made to change methods of preparation and processes over abandonment of the material.

For instance, in chromatography applications, porous materials are produced by packing columns with particles that are themselves porous. The particles may be bonded to each other depending on the physical requirements of the system. An example of a similar technology is described in U.S. Patent 4,010,242 and hereby incorporated in its entirety by reference.

Sol-gel monolithic materials have gained popularity due to their chemical properties and flexibility. The process of manufacture of a sol-gel monolithic material requires one liquid phase reaction path to produce inorganic porous materials such as silica gels. This process takes advantage of a process in which polymerizable low molecular weight species are first generated, and through polymerization reactions, aggregated or polymerized materials are finally obtained. The sol-gel method can be applied by hydrolyzing metal alkoxides, metal chlorides, metal salts or coordinated compounds that typically contain carboxyl or beta-diketone ligands. A similar type process is disclosed in Japanese Patent Publication No. 8-29952 and corresponding EP 0 363 697 and U.S. Pat. No. 5,009,688 assigned to Asahi Glass and hereby incorporated by reference. In this process an organic polymer is used, which is compatible with the solution of the metal alkoxide or its polymer, and which undergoes phase separation during the hydrolysis-polymerization step. This method comprises preparing a gel which has a solvent-rich phase capable of giving macropores of not smaller than about 100 nanometers in size, through sol-gel conversion in the presence of a pore forming agent, and finally drying and treating the material. The porous inorganic materials produced by this process display connected open macropores. Typical pore forming agents may comprise sodium polystyrene sulfonate, polyacrylic acid, polyallylamine, polyethylene-imine, polyethylene oxide, and polyvinyl pyrrolidone. Adding lower alkyl alcohols like methanol or ethanol to a gelling mixture can also be used to modify the size of the macropores. This methodology suffers from the limitation that pore sizes can not be adjusted due to the open macropores in many monolithic materials.

Japanese Patent Application Laid-open No. 7-41374 and corresponding EP 0 710 219 and U.S. Patent 5,624,875 describe a method for manufacturing porous materials which possess interconnected continuous macropores with a median diameter larger than 0.1 µm and additional mesopores in the walls of the macropores, the mesopores having a median diameter between 2 and 100 nm. This method comprises preparing a gel which has a solvent-rich phase capable of giving macropores of not smaller than about 100 nanometers in size, through sol-gel conversion in the presence of a pore forming agent, followed by dipping the wet monolithic gel in an aqueous solutions containing a matrix dissolving agent thereby modifying the distribution of mesopores in the gel, and finally drying and treating the porous inorganic material. The problem with this methodology is that it requires a number of complex steps and is somewhat laborious.

Therefore, there is a need for a porous material that is easy to make and manufacture and that has the inherent adaptable qualities of the monolithic materials described above. It would be desirable to provide a composition having a microporous structure that is useful in a variety of applications. In addition, it would be desirable to provide a simple method to produce inorganic porous materials, mainly composed of glass or glass-ceramic components, having interconnected continuous macropores with a median diameter larger than 0.1 µm. These and other limitations of the prior art are obviated by the present invention.

### BRIEF DESCRIPTION OF THE FIGURES

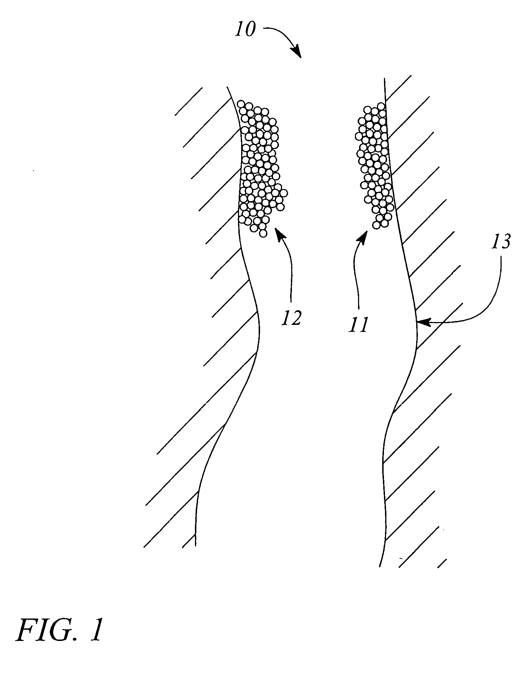

Figure 1 shows a schematic representation of a structure of the present invention.

### DETAILED DESCRIPTION OF THE INVENTION

Before describing the invention in detail, it must be noted that, as used in this specification and the appended claims, the singular forms "a," "an," and "the" include plural referents unless the context clearly dictates otherwise. Thus, for example, reference to "a monolithic material" includes more than one "monolithic material". Reference to a "macropore" or an "inorganic material" includes more than one "macropore" or "inorganic material". In describing and claiming the present invention, the following terminology will be used in accordance with the definitions set out below.

A "monolithic phase" refers to a porous medium that comprises pores that are not formed by the packing, and optionally bonding, of a set of discrete particles. Examples of such phases and methods for their synthesis are provided in U.S. patents 6,207,098, 5,624,875, and 5,009,688, which are all hereby incorporated by reference in their entirety. The monolithic phase may optionally have organic moieties bonded to its surface that provide a functional utility to the phase. For example octadecyl moieties are commonly bonded to silica phases in order to provide chromatographic utility.

"Monolithic precursor" refers to a monolithic phase onto which nanoparticles are to be attached to make the product of the present invention

"Macropores" refers to pores in the monolithic phase that are of greater than about 0.1µm in their smallest dimension and that provide a continuous fluid channel through the phase.

"Inorganic materials" refers to terms known and described in the chemical art. The term also refers to hybrid materials as described in U.S. patents 4,017,528, 6,686,035 and 6,528,167. All three patents are herein incorporated by reference. Both the monolithic precursor materials and the nanoparticles bonded thereto can comprise hybrid materials.

"Specific surface area" refers to the surface area per gram of a material. Specific surface area can be measured, for example, by ...

"Coating compositions" refers to the materials that are contacted with the macropores of the monolithic precursor in order to leave a coating or deposit of nanoparticles thereon.

The coating compositions of the present invention may be in any form that is suitable for passing through the monolithic precursor, such as liquids (aqueous or nonaqueous), pastes, sprays, foams, and the like.

The term "nanoparticle" refers to materials that are from 1-200 nm in length or width.

In some embodiments, the coating composition may comprise: (a) a plurality of nanoparticles, which may be an effective amount of nanoparticles; (b) optionally one or more adjunct ingredients; and (c) a suitable carrier medium. In these, or other embodiments, the coating composition may further comprise one or more of the following: a surfactant; one or more functionalized molecules exhibiting properties selected from the group consisting of hydrophilic, hydrophobic and mixtures thereof associated with at least some of the nanoparticles; or both.

An effective amount of nanoparticles is included in compositions useful for coating the walls of the macropores. As used herein, "effective amount of nanoparticles" refers to the quantity of nanoparticles necessary to impart the desired functional benefit in the specific composition. For example if the composition is to be used in a column for chromatography, the effective amount will be the amount that provides effective separation of the analytes to be passed through the column. Such effective amounts are readily ascertained by one of ordinary skill in the art and is based on many factors, such as the particular nanoparticles used, the surface coating application, the specific composition of the surface coating composition, and whether a surface modification on either the monolithic precursor or the nanoparticles is required. For example for chromatographic applications an average pore size in the range 20 to 500 Angstroms is typical, and optionally 80 to 300 Angstroms. Materials for use in chromatographic separations are also typically characterized by their surface area per gram. A surface area per gram of material of between 1 m².g⁻¹ to 500 m².g⁻¹

In an embodiment of the invention, the coating composition may be prepared by dispersing the dry nanoparticle powder into deionized water to form a mixture. In another embodiment, the coating composition may be prepared by diluting a nanoparticle gel with deionized water to form a mixture. Any of these mixtures may then be applied to the surface of the monolithic precursor by passing it through the precursor so that it comes into intimate contact with the macropores of the monolithic precursor. The process of passing the mixture into the monolithic precursor and draining it, and optionally drying it for example by passage of air or another gas through the precursor can be repeated until an effective amount of nanoparticles has been deposited on the surface of the macropores as judged by the suitability of the final composition.

The nanoparticles can also be deposited on the surface of the macropores by precipitation. Means for precipitation will be well known to one skilled in the art of colloid and surface chemistry, but for example, adjustment of pH or ionic strength are methods well known for precipitating colloidal particles onto surfaces.

The number of times the coating composition needs to be applied to the monolithic precursor and the duration of the exposure of macropores to the coating composition will be a function of the required concentration of nanoparticles and other materials in the coating composition. These parameters may be readily determined by one skilled in the art without undue experimentation.

The nanoparticles may optionally comprise a surface covering, either coated or chemically bonded, that provides a useful functionality to the composition of the invention. For example, octadecyl moieties are commonly bonded to silica surfaces in order to provide a phase that is useful for chromatographic separations.

An effective amount of functionalized surface molecules, that provide hydrophilic and/or hydrophobic properties to the nanoparticle surface, is defined as modifying from about 1% to about 100% of the nanoparticle surface.

The present invention also provides liquid coating compositions, alternatively aqueous liquid coating compositions. Liquid coating compositions alternatively comprise in addition to the nanoparticles described herein, a suitable carrier medium. The carrier medium can comprise any suitable amount of the coating composition, including but not limited to from about 10% to about 99%, alternatively from about 30% to about 95%, by weight of the coating composition. Suitable carrier mediums comprise those, which are capable of forming a stable dispersion of the nanoparticles. Examples include, but are not limited to water, deionized water, methanol, alcohol, ethanol, acetone, and ethylene glycol, and combinations thereof.

Suitable carrier mediums comprise liquids and gases. One suitable carrier medium is water, which can be distilled, deionized, or tap water. Water is valuable due to its low cost, availability, safety, and compatibility. Though aqueous carrier mediums are more common than dry, nonaqueous mediums, the present invention may exist as a dry powder, granule or tablet or encapsulated complex form.

Optionally, in addition to or in place of water, the carrier can comprise a low molecular weight organic solvent. Preferably, the solvent is highly soluble in water, e.g., ethanol, methanol, propanol, isopropanol, and the like, and mixtures thereof. Low molecular weight alcohols can reduce the surface tension of the dispersion to improve wettability of the soft surface. This is particularly helpful when the soft surface is hydrophobic. Low molecular weight alcohols can also help the treated surface to dry faster. The optional water-soluble low molecular weight solvent can be used at any suitable level. Several non-limiting examples, include a level of up to about 50%, or more; from about 0.1% to about 25%; from about 2% to about 15%, and from about 5% to about 10%, by weight of the total composition. Factors that need to consider when a high level of solvent is used in the coating composition are odor, flammability, dispersion capbability of the nanoparticles and environmental impact.

The nanoparticle system comprising a monolithic precursor and bonded nanoparticles may comprise materials that serve a common purpose or modification of surfaces of the monolithic precursors to bring about the desired benefits. These benefits may include but are not limited to one or more of the following: modification of surface hydrophobicity and consequently chromatographic or other properties related to relative adsorbtivity, modification of surface friction, and improved lifetime relative to surfaces unmodified with such nanoparticle systems.

All of the nanoparticle types described below can have organic moieties optionally bonded to them. This may comprise either the total population of particles or a sub population.

The nanoparticles, may comprise particles with a largest dimension (e.g., a diameter) of less than or equal to about 750 nm (nanometers). The particles that are useful herein can also include any set of particles that have a largest dimension that is less than, or less than or equal to any number which is an increment of 5 nm less than 750 nm, and in some cases may even include larger particles. Also incorporated and included herein, as if expressly written herein, are all ranges of particle sizes that are between 0 nm and 750 nm. It should be understood that every limit given throughout this specification will include every lower, or higher limit, as the case may be, as if such lower or higher limit was expressly written herein. Every range given throughout this specification will include every narrower range that falls within such broader range, as if such narrower ranges were all expressly written herein.

Non-limiting examples of particle size distributions of the nanoparticles are those that fall within the range from about 0.5 nm to less than about 750 nm, alternatively from about 2 nm to less than about 200 nm, and alternatively from about 2 nm to less than about 150 nm. It should also be understood that certain ranges of particle sizes may be useful to provide certain benefits, and other ranges of particle sizes may be useful to provide other benefits. The mean particle size of various types of particles may differ from the particle size distribution of the particles. For example, a layered synthetic silicate can have a mean particle size of about 25 nanometers while its particle size distribution can generally vary between about 10 nm to about 40 nm. (It should be understood that the particle sizes that are described herein are for particles when they are dispersed in an aqueous medium and the mean particle size is based on the mean of the particle number distribution. Non-limiting examples of nanoparticles can include crystalline or amorphous particles with a particle size from about 0.5 to about 750 nanometers. Nanotubes can include structures up to 1 centimeter long, alternatively with a particle size from about 2 to about 50 nanometers.

Inorganic nanoparticles generally exist as oxides, silicates, carbonates and hydroxides. Some layered clay minerals and inorganic metal oxides can be examples of nanoparticles. The layered clay minerals suitable for use in the present invention comprise those in the geological classes of the smectites, the kaolins, the illites, the chlorites, the attapulgites and the mixed layer clays. Typical examples of specific clays belonging to these classes are the smectites, kaolins, illites, chlorites, attapulgites and mixed layer clays. Smectites, for example, include montmorillonite, bentonite, pyrophyllite, hectorite, saponite, sauconite, nontronite, talc, beidellite, volchonskoite and vermiculite. Kaolins include kaolinite, dickite, nacrite, antigorite, anauxite, halloysite, indellite and chrysotile. Illites include bravaisite, muscovite, paragonite, phlogopite and biotite. Chlorites include corrensite, penninite, donbassite, sudoite, pennine and clinochlore. Attapulgites include sepiolite and polygorskyte. Mixed layer clays comprise allevardite and vermiculitebiotite. Variants and isomorphic substitutions of these layered clay minerals offer unique applications.

Layered clay minerals may be either naturally occurring or synthetic. An example of one non-limiting embodiment of the coating composition uses natural or synthetic hectorites, montmorillonites and bentonites. Another embodiment uses the hectorites clays commercially available, and typical sources of commercial hectorites are the LAPONITEs.TM. from Southern Clay Products, Inc., U.S.A; Veegum Pro and Veegum F from R. T. Vanderbilt, U.S.A.; and the Barasyms, Macaloids and Propaloids from Baroid Division, National Read Comp., U.S.A.

Natural clay minerals typically exist as layered silicate minerals and less frequently as amorphous minerals. A layered silicate mineral has SiO₄ tetrahedral sheets arranged into a two-dimensional network structure. A 2:1 type layered silicate mineral has a laminated structure of several to several tens of silicate sheets having a three layered structure in which a magnesium octahedral sheet or an aluminum octahedral sheet is sandwiched between two sheets of silica tetrahedral sheets. In some embodiments, it may be desirable for the coating composition to comprise a plurality of nanoparticles that comprise types of (or a first group of) nanoparticles other than 2:1 layered silicates. It should be understood that such a group of nanoparticles refers to the type of nanoparticles, and such nanoparticles may be distributed throughout the coating composition in any manner, and need not be grouped together. Also, even in these embodiments, the coating composition may comprise at least some (possibly a non-functional amount) of nanoparticles comprising 2:1 layered silicates (which may comprise a second group of nanoparticles).

With appropriate process control, the processes for the production of synthetic nanoscale powders (i.e. synthetic clays) yields primary particles, which are nanoscale. If the particles are not usually present in the form of discrete particles, but instead predominantly assume the form of agglomerates due to consolidation of the primary particles, such agglomerates may reach diameters of several thousand nanometers, such that the desired characteristics associated with the nanoscale nature of the particles cannot be achieved. The particles may be deagglomerated, for example, by grinding as described in EP-A 637,616 or by dispersion in a suitable carrier medium, such as water or water/alcohol and mixtures thereof.

The production of nanoscale powders such as layered hydrous silicate, layered hydrous aluminum silicate, fluorosilicate, mica-montmorillonite, hydrotalcite, lithium magnesium silicate and lithium magnesium fluorosilicate are common. An example of a substituted variant of lithium magnesium silicate is where the hydroxyl group is partially substituted with fluorine. Lithium and magnesium may also be partially substituted by aluminum. In fact, the lithium magnesium silicate may be isomorphically substituted by any member selected from the group consisting of magnesium, aluminum, lithium, iron, chromium, zinc and mixtures thereof.

The ratio of the largest dimension of a particle to the smallest dimension of a particle is called the particle's aspect ratio. The aspect ratio of the nanoparticles, in some cases, is of interest in forming surfaces with the desired characteristics. The aspect ratio of the dispersed particles in a suitable carrier medium, such as water is also of interest. The aspect ratio of the particles in a dispersed medium can be considered to be lower where several of the particles are aggregated than in the case of individual particles. The aspect ratio of dispersions can be adequately characterized by TEM (transmission electron microscopy. Thus, the aspect ratio of the particles dispersed in the carrier medium can be affected if there is an aggregation of individual particles. In certain non-limiting embodiments, it may be desirable for at least some of (and preferably a plurality of) individual (non-aggregated) platelet and disc-shaped nanoparticles to have at least one dimension that is greater than or equal to about 0.5 nanometers, and an aspect ratio of greater than or equal to about 15. Larger aspect ratios may be more desirable for platelet and disc-shaped particles than for rod-shaped particles. The aspect ratio of nanosized clays is significantly smaller than that of natural clays where the aspect ratio is typically greater than 250 nm for natural occurring clays.

In certain non-limiting embodiments, it may be desirable for at least some of (and preferably a plurality of) the individual rod-shaped nanoparticles to have at least one dimension that is greater than or equal to about 0.5 nanometers, and an aspect ratio of greater than or equal to 1.

The inorganic metal oxides used in the invention may comprise silica, alumina or zirconium based nanoparticles that are naturally occurring or synthetic. They can also be hybrid materials that have organic moieties incorporated into their structure. Aluminum can be found in many naturally occurring sources, such as kaolinite and bauxite. Various forms of alumina are commercially available in the form of Gibbsite, Diaspore, and Boehmite from manufacturers such as Condea, Inc.

Formation of some aqueous sols of silica that are suitable for use in the present invention as coating compositions is described in U.S. patent 4,010,242.

### Example 1

### Preparation of Monolithic Precursors

Embodiments for production of porous inorganic oxide glass monoliths by the sol-gel process are described in U.S. Pat. Nos. 3,640,093; 3,678,144; 3,681,113; 3,811,918; 3,816,163; 3,827,893; 3,941,719; 4,327,065; 4,389,233; 4,397,666; 4,426,216; 4,432,956; 4,472,510 (Re 32,107); 4,477,580; 4,528,010; 4,574,063; and references cited therein; incorporated herein by reference.

### Example 2

### Monolithic material

In an example of the invention, a typical preparation of the process for manufacturing a monolithic precursor via sol-gel route which includes the steps of:
(a) Dissolving a water-soluble polymer or some other pore forming agent in a medium that promotes the hydrolysis of the metalorganic compound (see step b);
(b) (b) mixing a metal-organic compound which contains hydrolyzable ligands to promote hydrolysis reaction; (c) solidifying the mixture through the sol-gel transition, whereby a gel is prepared which has three dimensional interconnected phase domains one rich in solvent the other rich in inorganic component in which surface pores are contained; (e) removing the solution by evaporation drying and/or heat-treatment; (f) calcining the gel to form the porous material.

Other routes are available to produce the precursor monolithic material, for example in U.S. patent 4,765,818 assigned to Hoechst Celanese Corp. and incorporated herein by reference, processes for the production of porous glass monoliths are disclosed. Embodiments for production of porous inorganic oxide glass monoliths by leaching of a soluble phase from a solid glass structure are described in U.S. Pat. Nos. 2,106,744; 2,286,275; 2,303,756; 2,315,328; 2,480,672; 3,459,522; 3,843,341; 4,110,093; 4,112,032; 4,236,930; and 4,588,540.

### Example 3

### Coating of Macropores with Nanoparticles

The invention can be further understood by reference to the figures, which illustrate embodiments of the invention. FIG. 1 shows a schematic diagram of a channel in a structure of the product of the invention. A macropore (10) embedded in a monolithic material is bounded by walls (13). On the walls of the macropore are situated nanoparticles (11 and 12) that have been precipitated there. The required depth of the layer of nanoparticles is determined by the effectiveness of the product in the application for which is required to function. For example, for a chromatographic application, one skilled in the art would be able by experimentation to optimize the amount of the nanoparticle phase for separation of analytes. In the embodiment of figure 1 the nanoparticles are shown as partially covering the walls of the macropores. Further embodiments may have partial or total coverage of the walls of the macropores.

Methods of precipitating the nanoparticles onto the walls of the macropores will be known to one skilled in the art. In a non limiting example, precipitation can be achieved by lowering the pH of the coating medium while it is in contact with the macropores so that the nanoparticle colloid or suspension is destabilized and precipitates. In a further example, raising the ionic strength of the coating medium will also destabilize the nanoparticle colloid. Raising of the ionic strength can be accomplished by added any ionic compound known to one skilled in the art. As will be understood by one skilled in the art, the level of surfactant in the drying medium can be used to control the sensitivity of the precipitation process to pH or ionic strength.

The nanoparticles from the coating medium can also be deposited on the walls of the macropores by contacting the macropores with coating medium and then drying them so that a coating is left on the walls of the macropores. The process of deposition can be accomplished by filling the macropores of a monolithic precursor with coating medium, and placing the filled precursor into an oven. Either a forced air or a vacuum oven would be suitable for the process. The precursor would preferably be agitated gently during the drying process.

## Claims

1. A monolithic material for use in chromatography separations comprising a macropore having an inner surface and a nanoparticle attached to the inner surface of the macropore.

2. A monolithic material as recited in claim 1, wherein the monolithic material comprises an inorganic material.

3. A monolithic material as recited in claim 1, wherein the nanoparticles comprise an inorganic material.

4. A monolithic material as recited in claim 3, wherein the nanoparticles are selected from the group consisting of oxides of silica, oxides of alumina, oxides of zirconium, silicates, carbonates and hydroxides.

5. A monolithic material as recited in claim 4, wherein the nanoparticles comprise a diameter of from about 0.5 nm to about 750 nm.

6. A monolithic material as recited in claim 3, wherein the macropore comprises an average pore size of greater than 0.1 microns and the nanoparticles comprise a diameter of from about 0.5 nm to about 750 nm.

7. The monolithic material as recited in claim 7 in which the specific surface area of the material is between 5 and 5,000 square meters per gram.

8. The monolithic material of claim 1, wherein the nanoparticle, is attached to molecular moieties that impart a desired functionality to the monolithic material.

9. A method for liquid chromatography, comprising applying a sample to a column comprising an inorganic monolithic material comprising a macropore having an inner surface and a nanoparticle attached to the inner surface of the macropore

10. A process for making an inorganic monolithic material comprising interconnected macropores having an inner surface, with attached nanoparticles, comprising:
(a) providing a macroporous monolithic material having an inner surface;
(b) contacting the inner surface of the macropores with a coating composition comprising nanoparticles and a carrier medium to deposit the nanoparticle on the surface of the macroporous monolithic material.

11. The process of claim 7, wherein the deposition step comprises the removal of the carrier medium from the coating composition by evaporation.

12. The process of claim 7, wherein the deposition step further comprises precipitating the nanoparticles by changing the composition of the carrier medium.
